# EUROPÄISCHE PATENTSCHRIFT

(11) **EP 3 630 378 B1**
(45) Veröffentlichungstag und Bekanntmachung des Hinweises auf die Patenterteilung: **20.03.2024**
(21) Anmeldenummer: 18726481.7
(22) Anmeldetag: 27.05.2018
(51) Int. Cl.: B07B 13/18, B07B 1/42, B07B 13/16, B07B 1/46, G09B 9/12, B07B 1/52

(54) **SIEBVORRICHTUNG UND BETRIEBSVERFAHREN**
SCREENING DEVICE AND METHOD
DISPOSITIF DE TAMISAGE ET PROCÉDÉ DE FONCTIONNEMENT

(30) Priorität: 29.05.2017 EP 17173326
(43) Veröffentlichungstag der Anmeldung: 08.04.2020
(73) Patentinhaber: A O Ideas GmbH, 8581 Schocherwil (CH)
(72) Erfinder: CARRASCO, César, 8581 Schocherswil (CH)
(74) Vertreter: Rutz & Partner
(86) Internationale Anmeldenummer: PCT/EP2018/063859
(87) Internationale Veröffentlichungsnummer: WO 2018/219840

(56) Entgegenhaltungen:
- WO-A1-94/10665
- WO-A1-2014/077685
- GB-A- 1 350 941
- GB-A- 2 082 090
- US-A- 4 082 657
- US-A1- 2006 243 643

## Beschreibung

Die Erfindung betrifft eine Siebvorrichtung mit einer Tragvorrichtung, mittels der ein Sieb gehalten ist, sowie ein Betriebsverfahren für diese Siebvorrichtung.

Siebvorrichtungen, die dem Aufteilen eines Schüttguts, z.B. eines Feststoffgemisches, in Fraktionen mit unterschiedlichen Korngrössen dienen, werden z.B. in der Rohstoffaufbereitung, der Nahrungsmittelindustrie, der chemischen Industrie und der Baustoffindustrie verwendet.

Gemäss https://en.wikipedia.org/wiki/Sieve umfasst eine Siebvorrichtung einen Siebbelag, der als Trennmedium eine Vielzahl gleich grosser Öffnungen enthält. Der Siebbelag besteht entweder aus Metall (Lochblech, Drahtgewebe, Metallgitter oder Metallstäben), Kunststoff, Gummi verschiedener Härten oder Seidengaze. Die Grösse der Öffnungen wird als Maschenweite bezeichnet und definiert den Siebschnitt. Grössere Körner verbleiben oberhalb der Öffnungen (Siebüberlauf), kleinere Körner fallen nach unten (Siebdurchgang). Ein Korn, das in etwa gleich gross ist wie die Maschenweite, nennt man Grenzkorn. Ein Sieb kann aus einem oder mehreren übereinanderliegenden Siebbelägen bestehen, wobei der Siebbelag mit der grössten Maschenweite im Siebstapel oben liegt. Für den Wirkungsgrad eines Siebs ist die Sauberkeit des Siebbelags von Bedeutung. Insbesondere die Verstopfung der Sieböffnungen durch Grenzkorn muss durch geeignete Massnahmen (z.B. Bürsten, Kugeln, Ketten, Gummiwürfel, die auf oder unter dem Sieb mit "laufen" oder durch eine Vergrösserung der Lochdurchmessers nach unten, wie bei z.B. bei konisch oder doppelt zylindrisch gebohrten Löchern, vermieden werden).

Bei grosstechnischen Anwendungen werden Siebbeläge zur Verbesserung der Siebleistung durch einen Antrieb zu bestimmten Bewegungen erregt. Die Bewegung des Siebbelags dient dem Weitertransport des Aufgabeguts in Sieblängsrichtung, dem Hinauswurf des Grenzkorns aus den Maschenöffnungen und der Nachhaltigkeit der Trennung (Siebwirkungsgrad) .

Bekannt sind Taumelsiebmaschinen (siehe z.B. die EP0943374A2), die einen in eine Taumelbewegung (Wurf- und Schwingbewegung) verbringbaren Siebaufbau, eine den Siebaufbau elastisch abstützende Stützeinrichtung und eine von einem Elektromotor drehangetriebene Antriebswelle aufweisen, die einen in seiner Neigung und Exzentrizität verstellbaren Schiefzapfen antreibt, auf dem der Siebaufbau gelagert ist. Durch die Antriebswelle und den Schiefzapfen wird der Siebbelag somit in eine vorbestimmte und stets gleiche Bewegung versetzt.

Aus der DE202005005847U1 ist eine Siebvorrichtung bekannt, die einen in einem Siebrahmen angeordneten Siebbelag aufweist, der mit einem Ultraschallwandler gekoppelt ist. Der Siebbelag ist während des Betriebs gegenüber der horizontalen geneigt. Aufgrund dieser Neigung fliesst das Siebgut während der Siebung automatisch über den Siebbelag gegen den untersten Punkt des Siebbelags. Feinkorn wird dabei durch die Maschen des Siebgewebes gesiebt. Grobkorn oder Schmutz gerät hingegen in einen Randbereich des Siebbelags und kann entfernt werden.

Bei diesen Siebvorrichtungen, bei denen die Siebbeläge in vorbestimmter Weise ausgerichtet sind oder bewegt werden, werden durchschnittlich sehr gute Ergebnisse erzielt. Trotzdem wäre es wünschenswert, wenn die Arbeitsprozesse weiter verbessert werden könnten. Hinsichtlich der grossen Durchflussmengen können dabei bereits geringfügige Verbesserungen zu wesentlichen Kosteneinsparungen führen.

Die US2006/243643A1 offenbart eine Trennvorrichtung, insbesondere einen Schieferschüttler, mit einem auf einer Basis montierten Korb, der einerseits mit einer Vibrationsvorrichtung und andererseits mit einer Winkeleinstellvorrichtung verbunden ist.

Die US4082657A offenbart eine Trennvorrichtung mit einer Vielzahl von Siebeinheiten, deren Neigung einstellbar ist.

Die GB1350941A und die WO94/10665A1 offenbaren Flugsimulatoren.

Der vorliegenden Erfindung liegt daher die Aufgabe zugrunde, eine verbesserte Siebvorrichtung sowie ein Betriebsverfahren für diese verbesserte Siebvorrichtung zu schaffen.

Insbesondere sind eine Siebvorrichtung und eine Betriebsvorrichtung für diese Siebvorrichtung zu schaffen, die es erlauben einen erhöhten Materialdurchsatz zu erzielen sowie Grobkorn, Schmutz und Grenzkorn aus den Siebmaschen oder Sieböffnungen rascher und einfacher zu entfernen.

Die erfindungsgemässe Vorrichtung soll in beliebigen Konfigurationen realisierbar sein, wie sie am jeweiligen Einsatzort üblich oder gewünscht sind. Die Siebvorrichtung soll zudem in beliebigen Industriebereichen zur Siebung von beliebigem Siebgut einsetzbar sein.

Die Siebvorrichtung soll einfach aufgebaut sein und einfach gewartet werden können. Parallel zur Erhöhung der Effizienz der Siebvorrichtung soll der Energiebedarf gesenkt werden.

Die Siebvorrichtung soll kompakt aufgebaut sein und nur wenig Raum in Anspruch nehmen, so dass sie in beliebige Arbeitsprozesse oder Produktionsprozesse vorteilhaft integriert werden kann.

Diese Aufgabe wird mit einer Siebvorrichtung und einem Betriebsverfahren gelöst, welche die in Anspruch 1 bzw. 12 angegebenen Merkmale aufweisen. Vorteilhafte Ausgestaltungen der Erfindung sind in weiteren Ansprüchen angegeben.

Die Siebvorrichtung umfasst eine Tragvorrichtung von der ein Sieb gehalten ist, welches wenigstens einen Siebbelag aufweist, der von einem Siebrahmen gehalten ist, der mit einer Antriebsvorrichtung verbunden ist.

Die erfindungsgemässe Siebvorrichtung erlaubt es somit, das Sieb entweder mit vorgegebenen Bewegungsabläufen oder mit bedarfsweise festgelegten und an die aktuellen Bedürfnisse adaptierten Bewegungsabläufen zu bewegen.

Bei periodischen Bewegungen, insbesondere harmonischen Bewegungen, bleibt das Siebgut nach einer bestimmten Zeit an einem bestimmten Ort, zum Beispiel über einem Maschendraht des Siebbelags. Dies insbesondere bei Nanopulver oder Pulver mit starker elektromagnetischer Ladung. Der Durchfluss wird dadurch begrenzt, ohne dass eine Optimierung möglich wäre Während mit vorgegebenen Bewegungsabläufen durchschnittlich gute Ergebnisse erzielt werden, erlaubt die Erfindung nun, die Bewegungsabläufe bedarfsweise zu optimieren und an die Gegebenheiten anzupassen.

Dabei können verschiedene Parameter in den Steuerungsalgorithmen berücksichtigt werden, wie das Gewicht, die Form, die Grösse, die Struktur, die Feuchtigkeit und/oder die Temperatur des Korns bzw. des Siebguts. Ferner werden vorzugsweise die Eigenschaften des Siebbelags, wie dessen Durchflussfläche und Mascheneigenschaften berücksichtigt.

Ferner werden vorzugsweise die Raumtemperatur und Raumfeuchtigkeit berücksichtigt.

Die Berücksichtigung der genannten Parameter ist besonders vorteilhaft, weil innerhalb eines Siebvorgangs die Rahmenbedingungen und/oder die Eigenschaften des Siebguts sprunghaft oder kontinuierlich ändern können. So können z.B. die Feuchtigkeit und die Temperatur des Siebguts oder der Umgebung ändern. Ferner können Unregelmässigkeiten bei der Zufuhr des Siebguts auftreten. Weiterhin kann zufälligerweise ein grösserer Anteil von Grenzkorn auftreten, welcher die Durchlässigkeit des Siebbelags punktuell oder regional beeinträchtigt.

Zur Korrektur entsprechender Störungen kann periodisch ein Wartungszyklus eingeschoben werden, während dem der Siebbelag von Grenzkorn befreit wird. Dazu kann der Siebbelag in eine Wartungsposition überführt werden, in der z.B. ein Wartungswerkzeug entlang der Unterseite des Siebbelages geführt wird.

Als Wartungswerkzeuge oder Wartungselemente sind Metallstäbe, Metallklingen, Bürsten, Kugeln, Ketten, Gummiwürfel, einsetzbar, die auf oder unter dem Siebbelag mitlaufen und vorzugsweise mit einem Antrieb verbunden sind.

Abweichungen vom normalen Siebvorgang treten insbesondere auch zu Beginn und am Schluss des Siebprozesses auf. In diesen Prozessphasen ist es besonders wichtig, dass das Siebgut gleichmässig verteilt wird. Dies kann wiederum durch Verschiebungen des Siebs entlang dessen Längsachse und Querachse vorteilhaft bewirkt werden. Zu Beginn des Siebprozesses sind dabei relativ schnelle Axialbewegungen, mit denen das Siebgut rasch verteilt wird, und gegen Ende des Siebprozesses relativ langsame Axialbewegungen von Vorteil, mit denen das Siebgut gleichmässig verteilt wird, ohne dass sich dieses vom Siebbelag abhebt. Die Bewegungsrichtungen, Rotationen, Bewegungsamplituden und Bewegungsfrequenzen des Siebs bzw. Siebbelags können dabei vorteilhaft an die Bedürfnisse angepasst werden, die durch Erfahrung des Anwenders oder Messung ermittelt werden. Für alle entsprechenden Prozessphasen können Bewegungsabläufe programmiert werden, die in der Folge bei Zustandsänderungen abgerufen und angewendet werden.

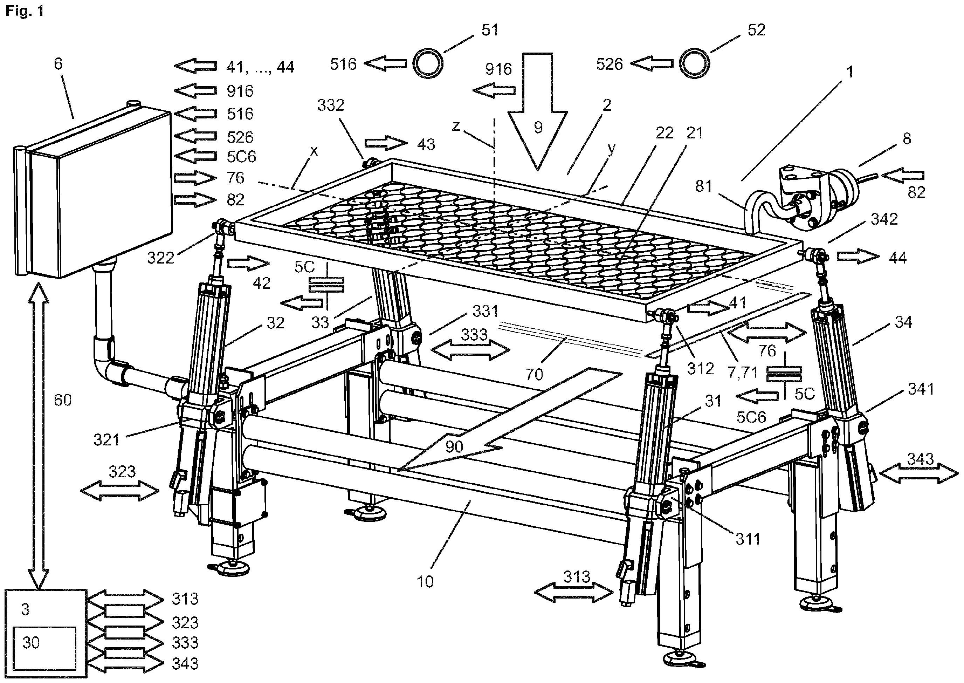

Vorzugsweise werden die Funktionselemente der Siebvorrichtung und Funktionselemente peripherer Geräte, wie des Materialspenders (in Fig. 1 symbolisch mit einem nach unten gerichteten Pfeil 9 gezeigt), miteinander gekoppelt, sodass z.B. bei Beginn und Beendigung des Freifalls des Siebguts das Sieb entsprechend steuerbar ist.

Die erfindungsgemässe Siebvorrichtung und das Betriebsverfahren erlauben es daher, während des Siebprozesses auftretenden Problemen wirksam zu begegnen. Die Siebvorrichtung kann aus einem regelmässigen Bewegungsablauf in einen unregelmässigen Bewegungsablauf überführt werden, in dem Bewegungen ausgeführt werden, mittels denen periodisch auftretende oder mittels Sensoren festgestellte Mängel, z.B. eine mangelhafte Verteilung des Siebguts auf dem Siebbelag, behoben werden. Z.B. können zwischenzeitlich axiale Verschiebungen des Siebs vollzogen werden, um eine gleichmässige Verteilung des Siebguts herbeizuführen.

Der Siebprozess kann dadurch periodisch optimiert werden, um einen erhöhten Materialdurchsatz zu erzielen. Dabei ist es auch möglich, die Zufuhr von Siebgut periodisch zu beenden und Grobkorn, Schmutz und Grenzkorn an den Rand des Siebbelags zu fördern und abzusaugen oder auszuwerfen.

Aufgrund der Flexibilität der Siebvorrichtung kann diese angepasst an beliebige Siebprozesse in beliebigen Konfigurationen realisiert werden. Die Siebvorrichtung kann in beliebigen Industriebereichen zur Siebung von beliebigem Prozessgut bzw. Siebgut einsetzbar sein. Die Siebvorrichtung kann in einfacher Weise mit beliebigen Materialspendern und Fördervorrichtungen kombiniert werden. Material kann durch Förderbänder zugeführt und weggeführt werden.

Besonders vorteilhaft ist, dass der Raumbedarf der Siebvorrichtung gering ist und die Siebvorrichtung zudem zwischen den Aktuatoren grosse Durchlassöffnungen zulässt, in denen das gesiebte Siebgut aufgefangen und abtransportiert werden kann.

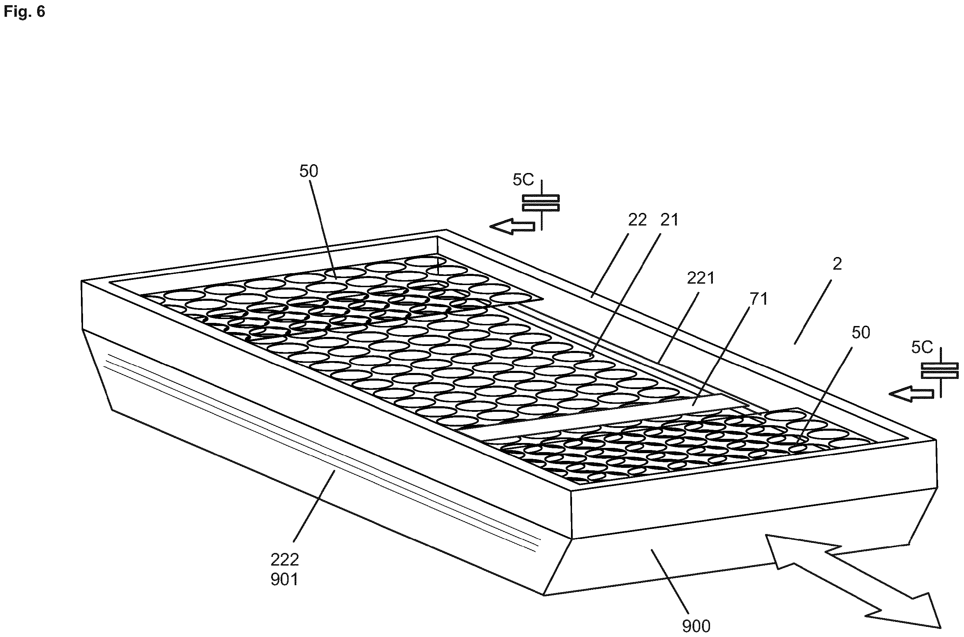

In einer besonders bevorzugten Ausgestaltung wird zwischen dem Sieb und der Tragvorrichtung sowie zwischen den Aktuatoren wenigstens ein Behälter (siehe Fig. 6) oder wenigstens ein Förderband (siehe Fig. 1) vorgesehen, in dem das gesiebte Material verlustfrei erfasst werden kann.

Insbesondere bei der Siebung von besonders wertvollem Siebgut kann der Siebrahmen vorteilhaft mit einem Behälter versehen werden, der vorzugsweise entlang der Längsachse des Siebrahmens eingefahren oder ausgezogen werden kann. Der Siebrahmen kann mittels der Aktuatoren dazu in eine Position verfahren werden, in der die Ankopplung und Entkopplung der Behälter erfolgen kann.

Der Aufbau der Antriebsvorrichtung mittels Aktuatoren ist dabei besonders einfach und vorteilhaft. Die Anzahl der Aktuatoren (oder Aktoren) ist mindestens drei und wird entsprechend den benötigten Bewegungen und Beschleunigungen des Siebs gewählt. Die Bewegungen und Bewegungsabläufe des Siebs werden durch das Betriebsprogramm gesteuert, weshalb der konstruktive Aufbau der Siebvorrichtung ausserordentlich einfach ist. Aufgrund des einfachen Aufbaus der Siebvorrichtung resultiert zugleich ein geringer Wartungsaufwand. Das Betriebsprogramm kann dabei bedarfsweise an neue Anwendungen angepasst werden.

Aufgrund der Ausführung gezielter und besonders wirksamer Bewegungen und Bewegungsabläufe kann die Effizienz der Siebvorrichtung erhöht und der Energiebedarf gleichzeitig gesenkt werden.

Möglich sind geradlinige, kreisförmige, spiralförmige, periodische, und/oder harmonische Bewegungen. Die Bewegungsabläufe können gleichförmig oder beschleunigt ablaufen, um gezielt auf das Siebgut oder den Siebbelag einzuwirken.

Ferner kann in Intervallen gezielt in den Siebprozess eingegriffen werden, insbesondere um unerwünschte Produktanteile, einschliesslich Grenzkorn, zu entfernen oder Wartungsarbeiten durchzuführen.

Aufgrund der Möglichkeit der gleichmässigen Verteilung des Siebguts können auch einfachere Siebkonstruktionen verwendet werden, in denen der Siebbelag auch peripher optimal genutzt werden kann. Besonders vorteilhaft ist die Verwendung eines rechteckigen Siebbelags.

Anhand der erfindungsgemässen Siebvorrichtung ist es nun möglich, anstelle vorgegebener Bewegungsabläufe, korrigierte Bewegungsabläufe durchzuführen, die vorteilhaft an den erwarteten oder ermittelten Zustand der Siebvorrichtung und des Siebguts angepasst werden können.

Zur Ermittlung insbesondere
a) des Zustands des vorliegenden Siebguts, insbesondere der Verteilung des Siebguts auf dem Siebbelag und der Topologie des auf dem Siebbelag liegenden Siebguts mit auffälligen Maxima, welche das Vorliegen von Grenzkorn anzeigen, und/oder
b) des Durchflusses des Siebguts über den gesamten Querschnitt des Siebs und des Siebbelags, und/oder
c) des Zustands des Siebbelags, insbesondere der Belastung des Siebbelag und/oder der Abdeckung des Siebbelages durch Siebgut,
werden vorzugsweise einer oder mehrere Sensoren vorgesehen.

Dabei können unterschiedliche Sensoren verwendet werden. Besonders vorteilhaft einsetzbar sind akustische Sensoren, insbesondere Ultraschallsensoren, optische Sensoren, insbesondere Kameras, Infrarot- Sensoren und Lasersensoren, Gewichtssensoren, wie Dehnungsmessstreifen, und kapazitive Sensoren.

Mittels optischer Sensoren können die Verteilung des Siebguts auf dem Siebbelag sowie der Durchtritt des Siebguts durch den Siebbelag an unterschiedlichen Positionen vorteilhaft gemessen werden. Optische Sensoren können oberhalb, unterhalb oder seitlich des Siebbelags positioniert werden, sodass sie die Topographie des auf dem Siebbelag aufliegenden Siebguts und den Durchtritt des Siebguts durch den Siebbelag an unterschiedlichen Positionen erfassen können.

Z.B. kann der Siebbelag auf einer Seite mit Licht beaufschlagt werden, welches auf der anderen Seite durch Lichtsensoren erfasst wird. Durch entsprechende Lichtschranken kann daher in einfacher Weise wertvolle Informationen gewonnen werden. Insbesondere kann festgestellt werden, ob das Siebgut die gesamte Fläche des Siebbelages bedeckt. Ebenso kann Grenzkorn detektiert werden, welches in den Maschen des Siebbelages hängen geblieben ist und Asymmetrien in der Topographie des Siebguts verursacht. Bei der Detektion einer ungenügender Verteilung, unerwarteter Asymmetrien oder unerwarteter Maxima innerhalb des aufliegenden Siebguts können entsprechende Korrekturmassnahmen ergriffen und entsprechende Bewegungen des Siebs eingeleitet werden.

Gestützt auf die Messsignale bzw. Messdaten kann der Siebprozess in der Folge vorteilhaft beeinflusst werden.

Mittels kapazitiver Sensoren können minimalste Veränderungen des Siebbelags, insbesondere Dehnungen und Deformationen des Siebbelags unter Last, festgestellt werden.

Kapazitive Sensoren können besonders einfach realisiert werden, da der Siebbelag bereits eine Elektrode eines Messkondensators bildet. Die zweite Elektrode der kapazitiven Sensoren können durch je ein Metallelement gebildet werden, welches vorzugsweise starr mit dem Siebrahmen verbunden, diesem gegenüber jedoch isoliert ist. Vorteilhaft können die zweiten Elektroden als Stäbe oder Platten oder gelochte Siebe ausgestaltet sein, sodass sie den Transport des Siebguts nicht behindern.

Zur Messung einer Deformation des Siebbelags bzw. der ersten Elektrode wird z.B. an die beiden Elektroden eine Spannung angelegt, die in der Folge in Abhängigkeit der Deformation der ersten Elektrode bzw. der Veränderung des Abstands zwischen den beiden Elektroden ändert. Auf diese Weise können minimalste Verformungen des Siebbelages gemessen werden. Vorzugsweise werden mehrere Messkondensatoren über die gesamte Fläche des Siebbelages vorzugsweise gleichmässig verteilt. Ferner können Veränderungen gemessen werden, die allein durch aufliegendes Siebgut verursacht werden, ohne dass eine Deformation des Siebbelags auftritt. Lokal auftretendes Siebgut wirkt dabei als Dielektrikum, welches ebenfalls Spannungsveränderungen verursachen kann.

Die Vermessung eines mit einem Siebgut beladenen oder eines nicht mit einem Siebgut beladenen Siebbelags anhand von mehreren an der Unterseite oder Oberseite des Siebbelags gleichmässig oder ungleichmässig verteilten kapazitiven Sensoren ist generell von Vorteil und kann bei beliebigen Siebvorrichtungen vorteilhaft eingesetzt werden. Der Siebrahmen kam aus Metall oder Plastik sein. Wesentlich ist, dass die beiden Elektroden galvanisch gegeneinander isoliert sind, sodass der Siebkondensator eine Spannung halten kann, die abhängig vom Abstand der Elektroden ist. Wie beschrieben, bildet der metallene Siebbelag vorteilhaft die erste Elektrode, so dass die weiteren Messkondensatoren in einfacher Weise mittels beliebig gestalteten Metallelementen realisiert werden kann, die in einem festen Abstand vom Siebbelag vorzugsweise am Siebrahmen montiert werden. Vorzugsweise werden gelochte Platten oder Stäbe als zweite Elektroden.

Vorteilhaft können auch akustische Sensoren, insbesondere Ultraschallsensoren, verwendet werden. Unterschiedliche Sensoren können auch in Kombination verwendet werden.

In Abhängigkeit von Erfahrungsdaten, die in einem elektronischen Speicher in der Steuereinheit abgelegt sind und/oder unter Berücksichtigung des zeitlichen Verlaufs und/oder nach Analyse der Messsignale der beschriebenen oder weiterer Sensoren können daher Steuersignale gebildet werden, die an die Antriebsvorrichtung oder gegebenenfalls an eine Wartungsvorrichtung übertragen werden.

Mittels dieser Steuersignale
a) können Lage, Neigung und/oder Bewegung des Siebs derart geändert werden, dass die Verteilung und Topographie des Siebguts bedarfsweise verändert wird; und/oder
b) kann das Sieb mit Krafteinwirkungen beaufschlagt werden, insbesondere um Grenzkorn vom Siebbelag zu lösen; und/oder
c) kann das Sieb in eine Wartungsposition, in der z.B. Grenzkorn entfernt wird, oder in eine Beladeposition oder eine Entladeposition geführt werden, in der z.B. ein Sammelbehälter entnommen oder eingesetzt wird; und/oder
d) kann ein entlang dem Siebbelag führbar gelagertes Wartungselement aktiviert werden.

Dazu wird vorgesehen, dass das Sieb im Raum in beliebigen Richtungen vor und zurück verschiebbar und vorzugsweise wenigstens um wenigstens eine Achse, vorzugsweise die Längsachse oder die Querachse, drehbar ist.

Das Sieb kann dabei mehrere Siebkomponenten umfassen, die je einen Siebbelag aufweisen. Vorzugsweise werden mehrere Siebbeläge vorgesehen, deren Maschenweiten schrittweise reduziert sind.

In vorzugsweisen Ausgestaltungen ist wenigstens einer der Siebbeläge oder wenigstens einer der Siebrahmen mit einem Generator verbunden, der zur Abgabe von mechanischen Wellenbewegungen bzw. Vibrationen oder Mikrowellen geeignet ist, mittels denen der Siebprozess beschleunigt wird. Dabei ist es auch möglich, dass mittels der Aktuatoren die genannten mechanischen Wellen und Einwirkungen bewirkt werden.

Die Aktuatoren können in beliebiger Anzahl vorhanden und beliebig ausgerichtet sein. Dabei kann das Sieb mittels der Aktuatoren von oben gehalten und somit aufgehängt sein oder von unten gestützt werden. Anhand von zusätzlichen Aktuatoren können zusätzliche Bewegungen oder Bewegungsabläufe realisiert werden. Ferner sind Kombinationen von Aktuatoren einsetzbar, welche das Sieb von oben halten und von unten stützen.

Entsprechend den erforderlichen Bewegungen werden auch Gelenke gewählt, welche den erforderlichen Freiheitsgrad aufweisen. Die verwendeten Drehgelenke können z.B. Kugelgelenke, Scharniergelenke, Gabelgelenke, Winkelgelenke oder zwei Gelenkfunktionen aufweisende Kombinationen davon sein.

Die Aktuatoren können einen steuerbaren Elektroantrieb aufweisen oder pneumatisch oder hydraulisch angetrieben werden.

Nachfolgend wird die Erfindung anhand von Zeichnungen näher erläutert. Dabei zeigt:
- Fig. 1: eine erfindungsgemässe Siebvorrichtung 1 mit einem Sieb 2, welches einen Siebrahmen 22 umfasst, der einen rechteckigen Siebbelag 22 hält und der gelenkig mit vier Aktuatoren 31, 32, 33, 34 verbunden ist, die gelenkig mit einer Tragvorrichtung 10 verbunden sind und mittels denen das Sieb 2 innerhalb eines Arbeitsvolumens nahezu beliebige Bewegungen ausführen kann, sowie mit Sensoren, insbesondere optischen Sensoren 51, 52 und/oder kapazitiven Sensoren 5C sowie mit einer Wartungsvorrichtung 7, 71 und einer Steuervorrichtung 6;
- Fig. 2: in symbolischer Darstellung die Siebvorrichtung 1 von Fig. 1 mit einem Sieb 2, welches von sechs Aktuatoren 31, 32, 33, 34, 35, 36 gehalten ist, mittels denen das Sieb 2 weitere Bewegungen ausführen und zusätzlichen Beschleunigungen unterworfen werden kann;
- Fig. 3: die Siebvorrichtung von Fig. 3 mit einem Sieb 2, welches drei Siebkomponenten 2A, 2B, 2C umfasst, die je einen Siebrahmen 22 mit einem Siebbelag 21 aufweisen und denen vorzugsweise je wenigstens ein Überwachungssensor 51, ..., 54; 5C zugeordnet und vorzugsweise eine Wartungsvorrichtung 7 zugeordnet sind;
- Fig. 4: die Siebvorrichtung von Fig. 1 mit einem Sieb 2, das einen runden Siebbelag 21 aufweist, der nur in der Mitte mit einem Siebgut 9 bedeckt ist;
- Fig. 5: die Siebvorrichtung von Fig. 4 mit einem Sieb 2, welches drei Siebkomponenten 2A, 2B, 2C umfasst, die je einen Siebrahmen 22 mit einem Siebbelag 21 aufweisen und denen vorzugsweise je wenigstens ein Überwachungssensor 51, ..., 54; 5C zugeordnet ist; und
- Fig. 6: ein Sieb 2 in einer mit zwei kapazitiven Sensoren 5C und einem Wartungselement 71, welches verschiebbar in Führungskanälen 221 des Siebrahmens 22 geführt ist.

Fig. 1 zeigt eine erfindungsgemässe Siebvorrichtung 1 in einer vorzugsweisen Ausgestaltung mit einem Sieb 2, welches einen Siebrahmen 22 umfasst, der einen rechteckigen Siebbelag 22 hält und der durch Gelenke 312, 322, 332, 342 je mit einer Kolbenstange von vier Aktuatoren 31, 32, 33, 34 verbunden ist, die durch Gelenke 311, 321, 331, 341 mit einer Tragvorrichtung 10 verbunden sind. Die Tragvorrichtung 10 umfasst vier mit den Aktuatoren 31, 32, 33, 34 verbundene Säulen, die durch Querstreben miteinander verbunden sind.

Die Aktuatoren 31, 32, 33, 34 sind Teil einer Antriebsvorrichtung 3, welche zusätzlich Medienleitungen 313, 323, 333, 343 umfasst, über die z.B. elektrische Energie oder ein hydraulisches oder pneumatisches Medium von einer Quelle 30 zu den Aktuatoren 31, 32, 33, 34 übertragen werden kann.

Zur individuellen Ansteuerung der einzelnen Aktuatoren 31, 32, 33, 34 ist die Antriebsvorrichtung 3 über Kommunikationsleitungen, insbesondere Steuerleitungen 60 mit einer Steuereinheit 6 verbunden, in der ein Steuerrechner mit einem Betriebsprogramm vorgesehen ist. Das Betriebsprogramm ist in einem Speicher abgelegt, in dem vorzugsweise auch Betriebsdaten und Erfahrungswerte abgelegt sind, auf die das Betriebsprogramm zugreifen kann, um die Steuersignale zu erzeugen.

Der Steuereinheit 6 sind ferner Messsignale 516, 526, 5C6 von Sensoren 51, 52, 5C sowie Statussignale 916 einer Spendevorrichtung oder Fördervorrichtung 9 zuführbar, von der das Siebgut zum Siebbelag 21 gelangt. Die Sensoren 51 und 52 sind optische Sensoren, z.B. bildgebende Sensoren, mittels denen der Zustand des Siebguts überwacht wird, das auf den Siebbelag 21 gelangt ist. Ferner kann die Steuereinheit mit Temperatursensoren und Feuchtigkeitssensoren verbunden sein, mittels denen die Temperatur und Feuchtigkeit der Umgebung und/oder des Siebguts gemessen wird.

Besonders elegant kann der Zustand des Siebbelags 21 mittels mehreren kapazitiven Sensoren 5C gemessen werden, die je einen Messkondensator aufweisen, dessen erste Elektrode durch den Siebbelag 21 gebildet wird. Die zweite Elektrode, wie ein Metallstab, eine Metallfolie, ein Metallgitter oder dergleichen, ist vorzugsweise in geringem Abstand unterhalb oder oberhalb des Siebbelags 21 angeordnet und stabil z.B. mit dem Siebrahmen 22 verbunden. Mittels der galvanisch nicht miteinander verbundenen Elektroden des Messkondensators können Bewegungen des Siebbelages vorteilhaft erfasst werden, ohne den Durchfluss des Siebguts zu behindern.

Die Wartungsvorrichtung 7 ist symbolisch gezeigt und umfasst vorzugsweise ein stabförmiges, kugelförmiges oder klingenförmiges Wartungselement 71, welches im Siebrahmen 22 oder gelöst vom Siebrahmen 22 in Führungsschienen 70 gelagert und entlang dem Siebbelag 21 verschiebbar ist, um Grenzkorn vom Siebbelag 21 zu lösen.

Weiterhin sind von der Steuereinheit 6 Steuersignale 76, 82 an eine Wartungsvorrichtung 7 und an einen Generator, in der vorliegenden Ausgestaltung an einen Mikrowellengenerator 8 übertragbar, der über einen Kopplungsstab 81 mit dem Siebrahmen 22 verbunden ist.

Von der Steuereinheit 6 gesteuert, kann das Sieb 2 mittels den Aktuatoren 31, 32, 33, 34 innerhalb eines Arbeitsvolumens nahezu beliebige Bewegungen unterworfen werden. Das Sieb 2 kann wenigstens entlang seiner Längsachse x und/oder seiner Querachse y verschoben und/oder um eine vorzugsweise senkrecht zu diesen Achsen x, y stehende Drehachse z gedreht werden. Diese praktisch uneingeschränkten Bewegungen im Raum sowie die erforderlichen Beschleunigungen können durch weitere Aktuatoren unterstützt werden. Mit einer Bestückung von sechs Aktuatoren kann in wirtschaftlicher Weise praktisch ein Maximum an Möglichkeiten realisiert werden. In der vorliegenden Ausgestaltung ist das Sieb 2 durch die Aktuatoren 31, 32, 33, 34 von unten gestützt. Das Sieb 2 kann jedoch auch hängend an den Aktuatoren 31, 32, 33, 34 montiert werden. Zudem können Aktuatoren unten und oben oder auch seitlich vorgesehen werden. Insgesamt resultiert trotz der vielseitigen Möglichkeiten ein relativ geringer Materialaufwand. Zu beachten ist, dass die Aktuatoren 31, 32, 33, 34 vorteilhafterweise viel Raum offen lassen, sodass zwischen der Tragvorrichtung 10 und dem Sieb 2 problemlos grössere Behälter 900 (siehe Fig. 6) oder Förderbänder 90 montiert oder installiert werden können.

Die Aktuatoren 31, 32, 33, 34 sind vorzugsweise Linearantriebe mit einer Kolbenstange, die von einem Elektromotor angetrieben werden und schrittweise ausgefahren und zurückgefahren werden kann. Mittels der Kolbenstangen kann das Sieb 2 daher innerhalb eines Arbeitsvolumens nahezu beliebige Bewegungen ausführen. Die Bewegungsabläufe, die programmierbar sind und von der Steuereinheit 6 gesteuert werden, sind von der Anzahl der eingesetzten Aktuatoren abhängig, deren Steuerung entsprechend koordiniert wird. Die Steuereinheit 6, die von einem Schwenkarm gehalten ist, weist vorzugsweise einen Bildschirm bzw. Touchscreen auf, über den Kommandos eingegeben werden können, um vorprogrammierte Bewegungsabläufe auszuwählen oder neue Bewegungsabläufe festzulegen. Die Steuereinheit 6 kann die Ressourcen eines gängigen Notebookcomputers aufweisen, der vorzugsweise zusätzlich mit Signalprozessoren ausgerüstet ist, mittels denen die eintreffenden Messsignale praktisch verzögerungsfrei verarbeitet werden können.

Die Aktuatoren 31, 32, 33, 34 sind vorzugsweise durch Kugelgelenke 312, 322, 332, 342; 311, 321, 331, 341 mit dem Siebrahmen 22 und der Tragvorrichtung 10 verbunden, die es erlauben, die Aktuatoren 31, 32, 33, 34 im erforderlichen Mass uneingeschränkt in beliebige Richtungen zu drehen. Beim Ausfahren der Kolbenstange eines der Aktuatoren 31, 32, 33, 34 können daher die weiteren Aktuatoren 31, 32, 33, 34 beliebig mitdrehen.

Die Gelenke 312, 322, 332, 342; 311 werden vorzugsweise über je einen Gewichtssensor 41, 42, 43, 44, z.B. einen Gewichtssensor mit einem Dehnungsmessstreifen, mit dem Siebrahmen 22 verbunden, so dass jederzeit die Belastung des Siebbelags 21 und die Verteilung des Siebguts auf dem Siebbelag 21 gemessen werden kann. Sofern z.B. bei den Gewichtssensoren 41 und 44 ein erhöhtes Gewicht gemessen wird, so werden die Kolbenstangen der Aktuatoren 31 und 34 ausgefahren, um das Siebgut parallel zur Längsachse x gegen die Gewichtssensoren 42 und 43 gleiten zu lassen, bis eine gleichmässige Gewichtsverteilung vorliegt. Gleichzeitig können Vibrationen und weitere Bewegungen auf das Sieb 2 einwirken.

Es ist daher möglich, verschiedene Bewegungsabläufe einander zu überlagern. Z.B. sieht ein erstes Programm einen ersten Bewegungsablauf und ein zweites Programm einen zweiten Bewegungsablauf vor. Ein drittes Programm kann diese beiden Bewegungsabläufe kombinieren und einander überlagern.

Die Programmierung der Vorrichtung kann auf verschiedene Arten erfolgen. Beispielsweise kann das Sieb 2 entlang einer gewünschten Bahn geführt werden, wobei die Bewegungsverläufe der Kolbenstangen der Aktuatoren gemessen und registriert werden. Weiterhin können Kurvenflächen in einem geometrischen Raum definiert werden, wonach die Positionen der ersten Kugelgelenke ermittelt und der Verlauf der Abstände zwischen den zueinander korrespondierenden ersten und zweiten Kugelgelenke ermittelt werden. Die Aktuatoren 31, 32, 33, 34 können auch oszillierende Bewegungen ausführen, um Vibrationen des Siebbelags 21 zu erzeugen.

Vorzugsweise werden mehrere Bewegungsabläufe programmiert, sodass für jeden Zustand der Siebvorrichtung 1 und/oder des Siebguts, manuell selektiert oder automatisch gesteuert, der passende Bewegungsablauf eingestellt werden kann. Vorzugsweise ist ein Timer programmiert, welcher automatisch Programmänderungen auslöst, sodass z.B. nach 100 Arbeitszyklen ein Wartungszyklus eingefügt wird, in dem eine Reinigung (Entfernung von Ausschuss) oder Korrektur (Entfernung von Grenzkorn aus den Maschen) vorgenommen wird. Für den Wartungszyklus wird das Sieb 2 gegebenenfalls in eine Wartungsposition überführt.

Anhand der Gewichtssensoren 41, ..., 44 kann z.B. festgestellt werden, dass der Behälter 900 gefüllt ist und in eine Entladeposition zu fahren ist.

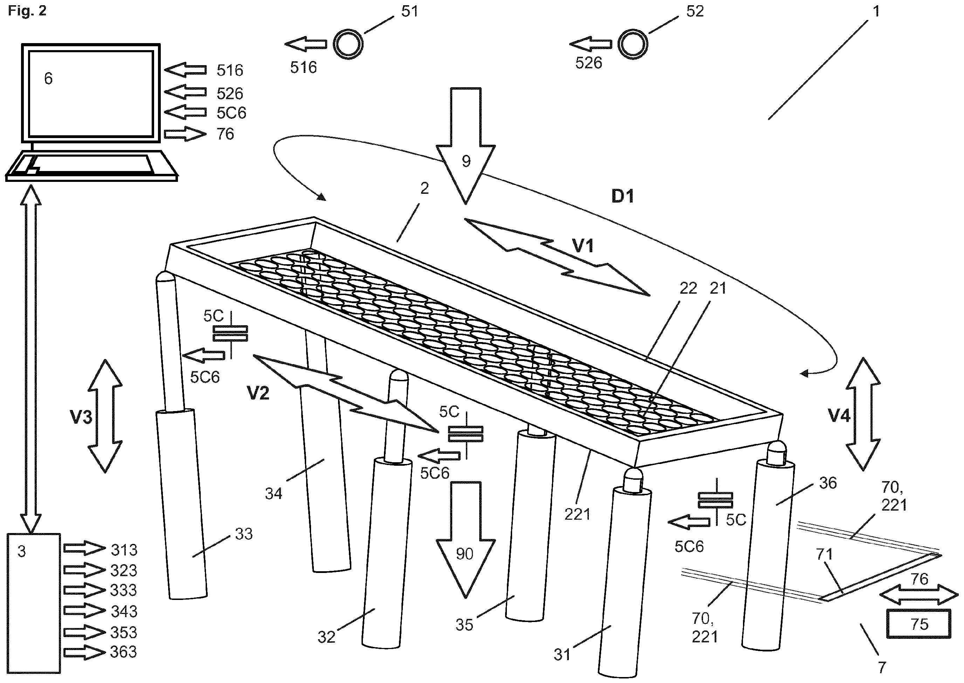

Die Wartungsvorrichtung 7 umfasst in dieser vorzugsweisen Ausgestaltung ein klingenförmiges Wartungselement 71, welches, vorzugsweise angetrieben von einem Motor 75 (in Fig. 2 schematisch gezeigt) entlang von Führungsschienen 70 verschiebbar ist. Für den Wartungsvorgang wird das Sieb 2 die gegen Führungsschienen 70 geführt, wonach das Wartungselement 71 entlang dem Siebbelag 21 geführt wird, insbesondere um Grenzkorn zu lösen.

Fig. 2 zeigt in symbolischer Darstellung die Siebvorrichtung 1 von Fig. 1 mit einem Sieb 2, welches von sechs Aktuatoren 31, 32, 33, 34, 35, 36 gehalten ist, mittels denen das Sieb 2 weitere Bewegungen ausführen und zusätzlichen Beschleunigungen unterworfen werden kann.

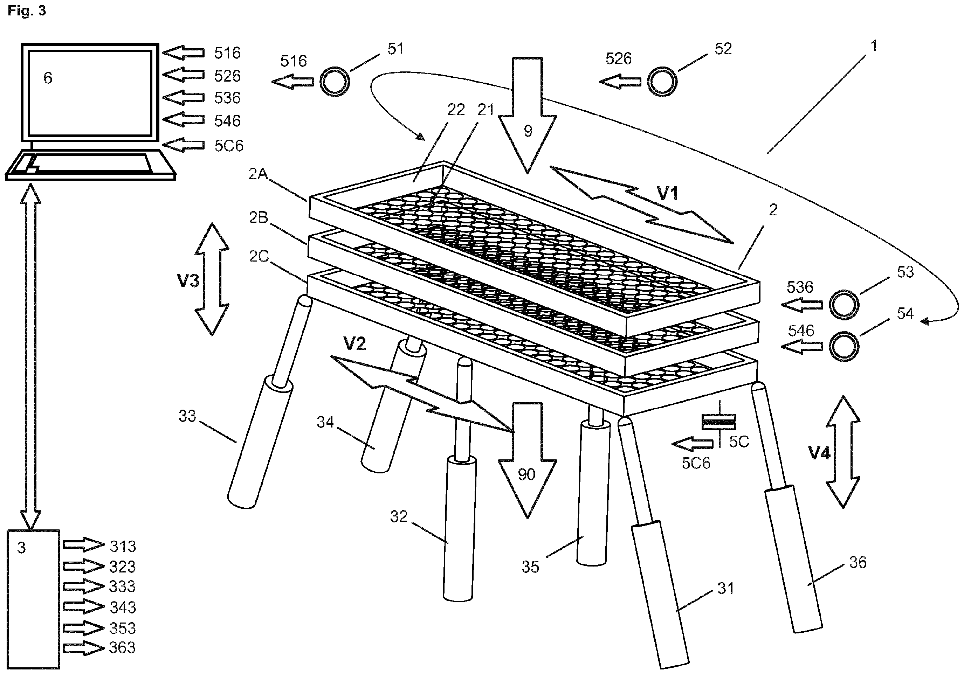

Fig. 3 zeigt die Siebvorrichtung von Fig. 3 mit einem Sieb 2, welches drei Siebkomponenten 2A, 2B, 2C umfasst, die je einen Siebrahmen 22 mit einem Siebbelag 21 aufweisen und denen vorzugsweise je wenigstens ein Überwachungssensor 51, ..., 54; 5C zugeordnet und vorzugsweise eine Wartungsvorrichtung 7 zugeordnet sind. Die Maschenweiten der Siebbeläge 21 reduzieren sich von oben nach unten, sodass in den ersten beiden Siebkomponenten 2A, 2B grobes Material ausgefiltert werden kann und in der dritten Siebkomponente 2C nur noch Material, welches wenig grösser ist als Grenzkorn. Vorzugsweise wird jede Siebkomponente 2A, 2B, 2C, deren Belastung mit Siebgut, sowie der Zustand des Siebbelags 21, individuell überwacht, sodass wiederum korrektive Massnahmen eingeleitet werden können.

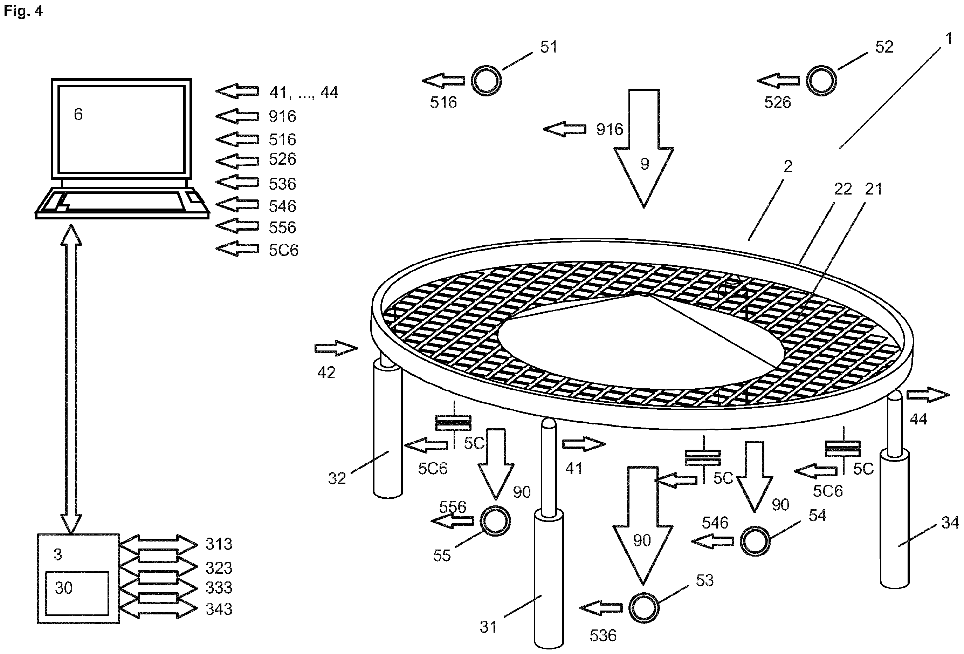

Fig. 4 zeigt die Siebvorrichtung von Fig. 1 mit einem Sieb 2, das einen runden Siebbelag 21 aufweist, der nur in der Mitte mit einem Siebgut 9 bedeckt ist. Mittels der optischen Sensoren 51, 52, die oberhalb des Siebbelags 21 vorgesehen sind, können die Topographie und die Verteilung des Siebguts von oben vermessen werden. Mit den optischen Sensoren 53, 54 und 55, die unterhalb des Siebbelags 21 angeordnet sind, können der lokale Durchsatz des Siebguts bestimmt und die Verteilung des Siebguts geschätzt werden. Mit kapazitiven Sensoren 5C, die vorzugsweise gleichmässig über das Sieb verteilt sind, können lokale Belastungen des Siebbelags 21 und somit wiederum die Verteilung des Siebguts ermittelt werden. Mit den Gewichtssensoren 41, 42, 43 und 44, die zwischen den Aktuatoren 31, 32, 33, 34 und dem Siebrahmen 22 angeordnet sind, können das Gewicht des Siebguts und dessen exzentrische Anordnung auf dem Siebbelag 21 bestimmt werden.

Die Siebvorrichtung 1 kann daher mit verschiedenen Sensoren vorteilhaft ausgerüstet werden, wobei auch nur einzelne Gruppen von Sensoren, optische Sensoren und/oder kapazitive Sensoren und/oder akustische Sensoren und/oder Gewichtssensoren für sich allein oder in beliebigen Kombinationen einsetzbar sind.

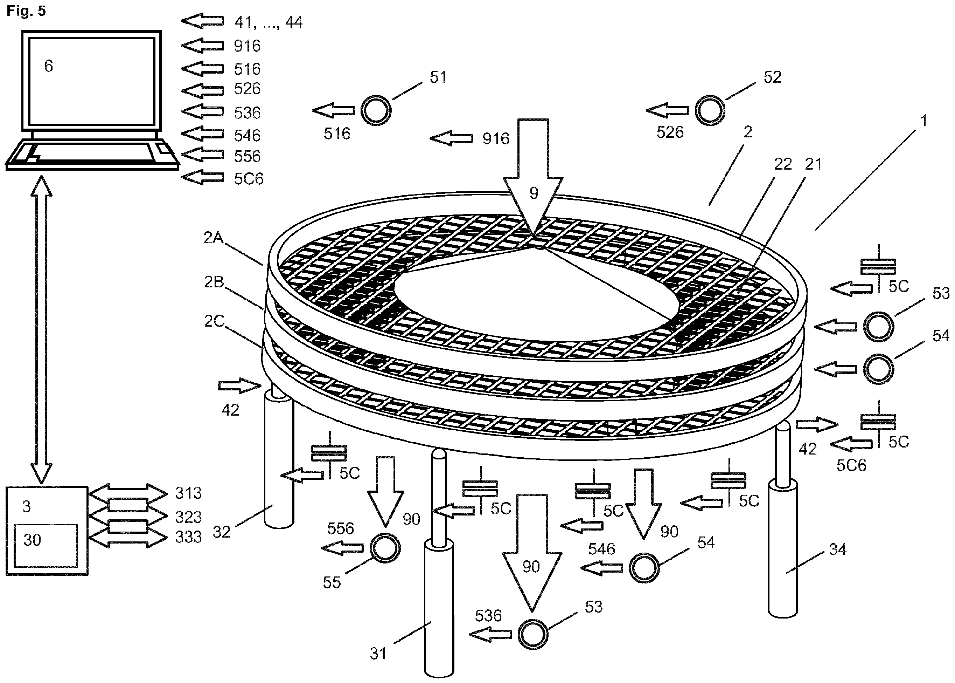

Fig. 5 zeigt die Siebvorrichtung von Fig. 4 mit einem Sieb 2, welches drei Siebkomponenten 2A, 2B, 2C umfasst, die je einen Siebrahmen 22 mit einem Siebbelag 21 aufweisen und denen vorzugsweise je wenigstens ein Überwachungssensor 51, ..., 54; 5C zugeordnet ist.

Fig. 6 zeigt ein Sieb 2 in einer vorzugsweisen Ausgestaltung mit zwei kapazitiven Sensoren 5C und einem Wartungselement 71, welches verschiebbar in Führungskanälen 221 innerhalb des Siebrahmens 22 geführt ist.

Der Siebrahmen 22 ist zudem mit einem Behälter 900 verbunden. Dazu weist der Siebrahmen 22 vorzugsweise aussen liegende Führungsschienen 222 auf, die zu Führungselementen 901 an der Innenseite des Behälters 900 korrespondieren. Der Behälter kann daher auf den Siebrahmen 22 geschoben und von diesem wieder entfernt werden. Dies kann wiederum in einfacher Weise durch entsprechende Steuerung der Aktuatoren 31, ..., 34, ..., 36 geschehen, welche den Siebrahmen 22 in eine entsprechende Position führen und durch axiale Verschiebung einen vollen Behälter 900 vorzugsweise automatisch abstossen oder einen leeren Behälter 900 vorzugsweise automatisch aufnehmen.

Die Steuerung der Aktuatoren 31, ..., 34, ..., 36 kann daher vorteilhaft in die vollständige Automatisierung der Siebvorrichtung 1 einbezogen und mit benachbarten Vorrichtungen einer Prozessstrasse synchronisiert werden.

## Patentansprüche

1. Siebvorrichtung (1) mit einer Tragvorrichtung (10) von der ein Sieb (2) gehalten ist, welches wenigstens einen Siebbelag (21) aufweist, der von einem Siebrahmen (22) gehalten ist, welcher mit einer Antriebsvorrichtung (3) verbunden ist, wobei die Antriebsvorrichtung (3), die von einer Steuereinheit (6) mittels eines Steuerprogramms steuerbar ist, wenigstens drei Aktuatoren (31, 32, 33, 34) umfasst, **dadurch gekennzeichnet, dass** die wenigstens drei Aktuatoren (31, 32, 33, 34) einerseits je über ein erstes Drehgelenk (311; 321; 331; 341) mit der Tragvorrichtung (10) und die andererseits je über ein zweites Drehgelenk (312; 322; 332,; 342) mit dem Siebrahmen (22) verbunden sind, so dass das Sieb (2) allein von den Aktuatoren (31, 32, 33, 34) gehalten und innerhalb eines Arbeitsvolumens verschiebbar und drehbar ist und dass die Aktuatoren (31, 32, 33, 34) von der Steuereinheit (6) derart steuerbar sind, dass sie oszillierende Bewegungen ausführen können, um Vibrationen des Siebbelags (21) zu erzeugen.

2. Siebvorrichtung (1) nach Anspruch 1, **dadurch gekennzeichnet, dass** das Sieb (2) räumlich vor und zurück verschiebbar ist und wenigstens um deren Längsachse (x) und/oder Querachse (y) drehbar ist.

3. Siebvorrichtung (1) nach Anspruch 1 oder 2, **dadurch gekennzeichnet, dass** das Sieb (2) mehrere Siebkomponenten (2A, 2B, 2C) umfasst, die je einen Siebbelag (21) aufweisen.

4. Siebvorrichtung (1) nach einem der Ansprüche 1-3, **dadurch gekennzeichnet, dass** wenigstens einer der Siebbeläge (21) oder wenigstens einer der Siebrahmen (22) mit einem Generator (8) verbunden ist, der zur Abgabe von mechanischen Wellenbewegungen oder Mikrowellen geeignet ist.

5. Siebvorrichtung (1) nach einem der Ansprüche 1 - 4, **dadurch gekennzeichnet, dass** vier, fünf oder sechs Aktuatoren (31, 32, 33, 34) mit dem Sieb (2) gelenkig gekoppelt sind und aus unterschiedlichen Richtungen auf das Sieb (2) einwirken können.

6. Siebvorrichtung (1) nach einem der Ansprüche 1 - 5, **dadurch gekennzeichnet, dass** zumindest einige der ersten und/oder zweiten Drehgelenke (311; 321; 331; 341; 312; 322; 332; 342) Kugelgelenke, Scharniergelenke, Gabelgelenke, Winkelgelenke oder zwei Gelenkfunktionen aufweisende Kombinationen davon sind.

7. Siebvorrichtung (1) nach einem der Ansprüche 1 - 6, **dadurch gekennzeichnet, dass** zumindest einige der Aktuatoren (31, ..., 34) einen steuerbaren Elektroantrieb aufweisen und/oder dass zumindest einige der Aktuatoren (31, ..., 34) pneumatisch angetrieben sind.

8. Siebvorrichtung (1) nach einem der Ansprüche 1 - 7, **dadurch gekennzeichnet, dass** wenigstens ein Sensor (51, ..., 5C) vorgesehen ist, der Messsignale (516, 526) für das auf dem Siebbelag (21) liegende Siebgut (9), insbesondere für die Verteilung und Topographie des Siebguts (9), aufnimmt und/oder dass wenigstens ein Sensor (5C) vorgesehen ist, der Messsignale (5C6) für den Zustand, insbesondere den Belastungszustand, des Siebbelages (21) aufnimmt und zur Steuereinheit (6) übermittelt.

9. Siebvorrichtung (1) nach Anspruch 8, **dadurch gekennzeichnet, dass** Messsignale (516, 526) für das auf dem Siebbelag (21) liegende Siebgut (9) mittels wenigstens eines optischen Sensors (51, 52, 53, 54) und/oder dass Messsignale (5C6) für den Zustand des Siebbelages (21) mittels eines kapazitiven oder akustischen Sensors (5C) ermittelbar sind.

10. Siebvorrichtung (1) nach einem der Ansprüche 8 - 9, **dadurch gekennzeichnet, dass** der wenigstens eine kapazitive Sensor (5C) einen Messkondensator aufweist, dessen erste Elektrode der Siebbelag (21) und dessen zweite Elektrode ein metallenes Element (50) ist, welches in einem konstanten Abstand zum Siebbelag (21) gehalten ist.

11. Siebvorrichtung (1) nach Anspruch 8, 9 oder 10, **dadurch gekennzeichnet, dass** das Steuerprogramm zur Analyse der Messsignale (516, 526, ..., 5C6) und zur Bildung von Steuersignalen (60, 76) geeignet ist, mittels denen
a) Lage, Neigung und/oder Bewegung des Siebs (2) derart änderbar ist, dass die Verteilung und Topographie des Siebguts änderbar ist; und/oder
b) das Sieb (2) mit Krafteinwirkungen beaufschlagbar ist, insbesondere um Grenzkorn vom Siebbelag (21) zu lösen; und/oder
c) das Sieb (2) in eine Wartungsposition führbar ist; und/oder
d) ein entlang dem Siebbelag (21) führbar gelagertes Wartungselement (71) aktivierbar ist.

12. Betriebsverfahren zur Steuerung der Siebvorrichtung (1) nach einem der Ansprüche 1 - 11, die eine Steuereinheit (6) aufweist, in der ein Steuerprogramm implementiert ist, die zur Abgabe von Steuersignalen (60) an eine Antriebsvorrichtung (3) vorgesehen ist, die wenigstens drei Aktuatoren (31, 32, 33, 34) umfasst, die einerseits je über ein erstes Drehgelenk (311; 321; 331; 341) mit einer Tragvorrichtung (10) und die andererseits je über ein zweites Drehgelenk (312; 322; 332,; 342) mit einem Sieb (2) verbunden sind, so dass das Sieb (2), welches wenigstens einen von einem Siebrahmen (22) gehaltenen Siebbelag (21) aufweist, allein von den Aktuatoren (31, 32, 33, 34) gehalten ist und in Abhängigkeit der Steuersignale (60) innerhalb eines Arbeitsvolumens verschiebbar und gegebenenfalls drehbar ist.

13. Betriebsverfahren nach Anspruch 12, **dadurch gekennzeichnet, dass** der Steuereinheit (6) Messsignale (516, 526, ..., 5C6) von Sensoren (51, ..., 5C) zuführbar sind, welche das auf dem Siebbelag (21) liegende Siebgut (9), insbesondere die Verteilung und Topographie des Siebguts (9), und/oder den Zustand, insbesondere den Belastungszustand, des Siebbelages (21 überwachen und dass die Steuereinheit (6) die Steuersignale (60; 76) bildet, mittels denen
a) Lage, Neigung und/oder Bewegung des Siebs (2) derart änderbar ist, dass die Verteilung und Topographie des Siebguts änderbar ist; und/oder
b) das Sieb (2) mit Krafteinwirkungen beaufschlagbar ist, insbesondere um Grenzkorn vom Siebbelag (21) zu lösen; und/oder
c) das Sieb (2) in eine Wartungsposition führbar ist; und/oder
d) ein entlang dem Siebbelag (21) führbar gelagertes Wartungselement (71) aktivierbar ist.

## Claims

1. Sieving device (1) with a support device (10) by which a sieve (2) is held, which has at least one sieve lining (21) which is held by a sieve frame (22) which is connected to a drive device (3), wherein the drive device (3), which can be controlled by a control unit (6) by means of a control program, comprises at least three actuators (31, 32, 33, 34), **characterised in that** that the at least three actuators (31, 32, 33, 34) on the one hand are each connected via a first swivel joint (311; 321; 331; 341) to the support device (10) and on the other hand are each connected via a second swivel joint (312; 322; 332; 342) to the sieve frame (22), so that the sieve (2) is held solely by the actuators (31, 32, 33, 34) and is displaceable and rotatable within an operating volume, and **in that** the actuators (31, 32, 33, 34) are controllable by the control unit (6) in such a way that they can execute oscillating movements in order to generate vibrations of the sieve lining (21).

2. Sieving device (1) according to claim 1, **characterised in that** the sieve (2) is spatially displaceable back and forth and is rotatable at least about its longitudinal axis (x) and/or transverse axis (y).

3. Sieving device (1) according to claim 1 or 2, **characterised in that** that the sieve (2) comprises a plurality of sieve components (2A, 2B, 2C), each of which comprises a sieve lining (21).

4. Sieving device (1) according to one of the claims 1-3, **characterised in that** at least one of the sieve linings (21) or at least one of the sieve frames (22) is connected to a generator (8) suitable for emitting mechanical wave movements or microwaves.

5. Sieving device (1) according to one of the claims 1 - 4, **characterised in that** four, five or six actuators (31, 32, 33, 34) are pivotally coupled to the sieve (2) and can act on the sieve (2) from different directions.

6. Sieving device (1) according to one of the claims 1 - 5, **characterised in that** at least some of the first and/or second swivel joints (311; 321; 331; 341; 312; 322; 332; 342) are ball joints, hinge joints, fork joints, angle joints or combinations thereof comprising two joint functions.

7. Sieving device (1) according to one of the claims 1 - 6, **characterised in that** at least some of the actuators (31, ..., 34) comprise a controllable electric drive and/or that at least some of the actuators (31, ..., 34) are pneumatically driven.

8. Sieving device (1) according to one of the claims 1 - 7, **characterised in that** at least one sensor (51, ..., 5C) is provided, which picks up measurement signals (516, 526) for the sieved product (9) lying on the sieve lining (21), particularly for the distribution and topography of the des sieved product (9), and/or that at least one sensor (5C) is provided, which picks up measurement signals (5C6) for the state, particularly the load state, of the sieve lining (21) and which transmit the picked up measurement signals to the control unit (6).

9. Sieving device (1) according to claim 8, **characterised in that** measurement signals (516, 526) for the sieved product (9) lying on the sieve lining (21) can be determined by means of at least one optical sensor (51, 52, 53, 54) and/or that measurement signals (5C6) for the state of the sieve lining (21) can be determined by means of a capacitive or acoustic sensor (5C).

10. Sieving device (1) according to one of the claims 8 - 9, **characterised in that** the at least one capacitive sensor (5C) comprises a measurement capacitor, whose first electrode is the sieve lining (21) and whose second electrode is a metal element (50), which is held in a constant distance from the sieve lining (21).

11. Sieving device (1) according to claim 8, 9 or 10, **characterised in** the control program is designed for the analysis of the measurement signals (516, 526, ..., 5C6) and for forming control signals (60, 76), with which
a) the position, inclination and/or movement of the sieve (2) is variable in such a way that the distribution and topography of the sieved product is changeable; and/or
b) the sieve (2) is subjectable to force effects, in particular to detach boundary grain from the sieve lining (21); and/or
c) the sieve (2) is guidable into a maintenance position; and/or
d) a maintenance element (71) mounted guidably along the screen lining (21) is activatable.

12. Operating method for controlling the sieving device (1) according to one of the claims 1 - 11, which comprises a control unit (6) in which a control program is implemented, which is provided for delivering control signals (60) to a drive device (3) which comprises at least three actuators (31, 32, 33, 34) which, on the one hand, are each connected via a first swivel joint (311; 321; 331; 341) to a support device (10) and, on the other hand, are each connected via a second swivel joint (312; 322; 332; 342) to a sieve (2), so that the sieve (2), which comprises at least one sieve lining (21) held by a sieve frame (22), is held solely by the actuators (31, 32, 33, 34) and is displaceable and optionally rotatable within an operating volume in dependence of the control signals (60).

13. Operating method according to claim 12, **characterised in that** the control unit (6) can be supplied with measuring signals (516, 526, ..., 5C6) from sensors (51, ..., 5C) which monitor the sieving product (9) lying on the sieve lining (21), in particular the distribution and topography of the sieving product (9), and/or the state, in particular the load state, of the sieve lining (21) and that the control unit (6) forms the control signals (60; 76), by means of which
a) the position, inclination and/or movement of the sieve (2) is variable in such a way that the distribution and topography of the sieved product is changeable; and/or
b) the sieve (2) is subjectable to force effects, in particular to detach boundary grain from the sieve lining (21); and/or
c) the sieve (2) is guidable into a maintenance position; and/or
d) a maintenance element (71) mounted guidably along the screen lining (21) is activatable.

## Revendications

1. Dispositif de tamisage (1) comprenant un dispositif de support (10) par lequel est maintenu un tamis (2) qui comprend au moins une garniture de tamis (21) maintenue par un cadre de tamis (22), lequel est relié à un dispositif d'entraînement (3), ledit dispositif d'entraînement (3), qui peut être commandé par une unité de commande (6) au moyen d'un programme de commande, comprenant au moins trois actionneurs (31, 32, 33, 34), **caractérisé en ce que** les au moins trois actionneurs (31, 32, 33, 34) sont reliés d'une part chacun au dispositif de support (10) par une première articulation pivotante (311 ; 321 ; 331 ; 341) et qui sont reliés d'autre part chacun au dispositif de support (22) par une deuxième articulation pivotante (312 ; 322 ; 332, ; 342) au cadre de tamis (22), de sorte que le tamis (2) est maintenu uniquement par les actionneurs (31, 32, 33, 34) et peut être déplacé et tourné à l'intérieur d'un volume de travail et que les actionneurs (31, 32, 33, 34) peuvent être commandés par l'unité de commande (6) de telle sorte qu'ils peuvent exécuter des mouvements oscillants pour générer des vibrations de la garniture de tamis (21).

2. Dispositif de tamisage (1) selon la revendication 1, **caractérisé en ce que** le tamis (2) est déplaçable spatialement en avant et en arrière et peut tourner au moins autour de son axe longitudinal (x) et/ou de son axe transversal (y).

3. Dispositif de tamisage (1) selon la revendication 1 ou 2, **caractérisé en ce que** le tamis (2) comprend plusieurs composants de tamisage (2A, 2B, 2C) qui présentent chacun une garniture de tamis (21).

4. Dispositif de tamisage (1) une des revendications 1-3, **caractérisé en ce qu'**au moins une des garnitures de tamis (21) ou au moins un des cadres de tamis (22) est relié à un générateur (8) apte à émettre des mouvements d'ondes mécaniques ou des micro-ondes.

5. Dispositif de tamisage (1) une des revendications 1 - 4, **caractérisé en ce que** quatre, cinq ou six actionneurs (31, 32, 33, 34) sont couplés de manière articulée avec le tamis (2) et peuvent agir sur le tamis (2) à partir de différentes directions.

6. Dispositif de tamisage (1) une des revendications 1 - 5, **caractérisé en ce qu'**au moins certaines des premières et/ou secondes articulations pivotantes (311; 321; 331; 312; 322; 332; 342) sont des articulations à rotule, des articulations à charnière, des articulations à fourche, des articulations à angle ou des combinaisons de celles-ci présentant deux fonctions d'articulation.

7. Dispositif de tamisage (1) une des revendications 1 - 6, **caractérisé en ce qu'**au moins certains des actionneurs (31, ..., 34) présentent un entraînement électrique commandable et/ou **en ce qu'**au moins certains des actionneurs (31, ..., 34) sont entraînés pneumatiquement.

8. Dispositif de tamisage (1) une des revendications 1 - 7, **caractérisé en ce qu'**au moins un capteur (51, ..., 5C) qui enregistre des signaux de mesure (516, 526) pour le produit à tamiser (9) reposant sur la garniture de tamis (21), en particulier pour la distribution et la topographie du produit à tamiser (9), et/ou qu'il est prévu au moins un capteur (5C) qui enregistre des signaux de mesure (5C6) pour l'état, en particulier l'état de charge, de la garniture de tamis (21) et les transmet à l'unité de commande (6).

9. Dispositif de tamisage (1) selon la revendication 8, **caractérisé en ce que** des signaux de mesure (516, 526) pour le produit à tamiser (9) reposant sur la garniture de tamis (21) sont détectables au moyen d'au moins un capteur optique (51, 52, 53, 54) et/ou que des signaux de mesure (5C6) pour l'état de la garniture de tamis (21) sont détectables au moyen d'un capteur capacitif ou acoustique (5C).

10. Dispositif de tamisage (1) une des revendications 8 - 9, **caractérisé en ce que** le au moins un capteur capacitif (5C) comprend un condensateur de mesure dont la première électrode est la garniture de tamis (21) et dont la deuxième électrode est un élément métallique (50) qui est maintenu à une distance constante de la garniture de tamis (21) .

11. Dispositif de tamisage (1) selon la revendication 8, 9 ou 10, **caractérisé en ce que** le programme de commande est adapté pour analyser les signaux de mesure (516, 526, ..., 5C6) et pour former des signaux de commande (60, 76) au moyen desquels
a) la position, l'inclinaison et/ou le mouvement du tamis (2) est modifiable de telle sorte que la distribution et la topographie du produit à tamiser est modifiable; et/ou
b) le tamis (2) peut être soumis à des effets de force, en particulier pour détacher les grains limites de la garniture de tamis (21); et/ou
c) le tamis (2) est guidable dans une position d'entretien; et/ou
d) un élément d'entretien (71) qui est logé de manière guidable le long de la garniture de tamis (21) est activable.

12. Procédé de fonctionnement pour la commande du dispositif de tamisage (1) selon une des revendications 1 - 11, qui présente une unité de commande (6) dans laquelle est implémenté un programme de commande, qui est prévue pour délivrer des signaux de commande (60) à un dispositif d'entraînement (3) qui comprend au moins trois actionneurs (31, 32, 33, 34) qui, d'une part, sont reliés chacun par une première articulation pivotante (311; 321; 331; 341) à un dispositif de support (10) et qui, d'autre part, sont reliés chacun par une deuxième articulation pivotante (312; 322; 332; 342) à un tamis (2), de sorte que le tamis (2), qui présente au moins une garniture de tamis (21) maintenue par un cadre de tamis (22), est maintenu uniquement par les actionneurs (31, 32, 33, 34) et peut être déplacé et éventuellement tourné en fonction des signaux de commande (60) à l'intérieur d'un volume de travail.

13. Procédé de fonctionnement selon la revendication 12, **caractérisé en ce que** l'unité de commande (6) reçoit des signaux de mesure (516, 526, ..., 5C6) de capteurs (51, ..., 5C) qui surveillent le produit à tamiser (9) reposant sur la garniture de tamis (21), en particulier la distribution et la topographie du produit à tamiser (9), et/ou l'état, en particulier l'état de charge, de la garniture de tamis (21), et **en ce que** l'unité de commande (6) forme les signaux de commande (60 ; 76) au moyen desquels
a) la position, l'inclinaison et/ou le mouvement du tamis (2) est modifiable de telle sorte que la distribution et la topographie du produit à tamiser est modifiable; et/ou
b) le tamis (2) peut être soumis à des effets de force, en particulier pour détacher les grains limites de la garniture de tamis (21); et/ou
c) le tamis (2) est guidable dans une position d'entretien; et/ou
d) un élément d'entretien (71) qui est logé de manière guidable le long de la garniture de tamis (21) est activable.
